(19) Europäisches Patentamt
European Patent Office
Office européen des brevets

(11) **EP 2 374 665 B1**

(12) **EUROPEAN PATENT SPECIFICATION**

(45) Date of publication and mention
of the grant of the patent:
**29.08.2012 Bulletin 2012/35**

(51) Int Cl.:
***B60R 19/12*** *(2006.01)*  ***B60K 11/04*** *(2006.01)*

(21) Application number: **11156024.9**

(22) Date of filing: **25.02.2011**

(54) **Pedestrian protection device for vehicle**

Fußgängerschutzvorrichtung für ein Fahrzeug

Dispositif destiné aux véhicules pour la protection des piétons

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2010 JP 2010088639**
**07.04.2010 JP 2010088640**

(43) Date of publication of application:
**12.10.2011 Bulletin 2011/41**

(73) Proprietor: **Honda Motor Co., Ltd.**
**Tokyo 107-8556 (JP)**

(72) Inventors:
• **Gunji, Yasuaki**
**Saitama 351-0193 (JP)**
• **Suzuki, Shunji**
**Saitama 351-0193 (JP)**

(74) Representative: **Trossin, Hans-Jürgen et al**
**Weickmann & Weickmann**
**Postfach 860 820**
**81635 München (DE)**

(56) References cited:
**EP-A1- 1 619 089    DE-A1- 10 149 443**
**FR-A1- 2 911 557    FR-A1- 2 919 566**
**FR-A1- 2 923 782    FR-A1- 2 932 747**
**GB-A- 2 321 624**

EP 2 374 665 B1

**Description**

BACKGROUND OF THE INVENTION

FIELD OF THE INVENTION

The present invention relates to a pedestrian protection device for a vehicle, according to the preamble part of claim 1 known from FR 2919566 A1..

DESCRIPTION OF THE RELATED ART

Japanese Patent No. 4048461B2 has made publicly known a configuration in which: when it is judged that it is unavoidable that a vehicle will collide with a pedestrian, an arm extending in a lateral direction of a vehicle body is projected frontward of the vehicle body from a lower part of a bumper to collide with a leg portion of the pedestrian; and collision energy is absorbed by making an upper body of the pedestrian fall onto a bonnet hood.

Further, Japanese Patent Application Laid-open No. 2007-320530 has made publicly known a configuration in which, when it is judged that it is unavoidable that a vehicle will collide with a pedestrian, a front grill and a lower bumper which have energy absorbing functions are projected frontward of a vehicle body to disperse collision energy applied on a lower body of the pedestrian by the front grill and lower bumper.

SUMMARY OF THE INVENTION

Meanwhile, as is the invention described in Japanese Patent No. 4048461B2, in the configuration in which collision energy is absorbed by making the upper body of the pedestrian fall onto the bonnet hood, it is feared that when a rotating angular velocity of the upper body of the pedestrian is high, a large impact may be applied to a head of the pedestrian.

In addition, as is the invention described in Japanese Patent Application Laid-open No. 2007-320530, since the lower bumper is projected frontward of the front grill, the leg portions of the pedestrian is swept strongly toward the front, so that an angular velocity of the upper body rotating rearward becomes high. Accordingly, there is a fear that a head of the pedestrian may collide with the bonnet hood strongly.

The present invention has been made in view of the foregoing situation. An object of the present invention is to absorb effectively collision energy while suppressing an angular velocity of an upper body of a pedestrian fallen rearward as low as possible, when a front part of a vehicle body collides with the pedestrian.

In order to achieve the object, according to the invention described in claim 1, there is provided a pedestrian protection device for a vehicle, the device disposed at a front portion of a vehicle body of a vehicle and configured to absorb collision energy at the time of a collision with a pedestrian, the device characterized by comprising: a hip portion energy absorption member configured to absorb the collision energy by colliding with a hip portion of the pedestrian; and a leg portion energy absorption member configured to absorb the collision energy by colliding with a leg portion of the pedestrian, characterized in that before the collision with the pedestrian, the hip portion energy absorption member is located forward of the leg portion energy absorption member, by the collision with the pedestrian, the hip portion energy absorption member and the leg portion energy absorption member are moved rearward while absorbing the collision energy, and after completion of the collision with the pedestrian, the hip portion energy absorption member is located rearward of the leg portion energy absorption member.

With the above configuration, the hip portion energy absorption member is located forward of the leg portion energy absorption member before the collision with the pedestrian, and is moved rearward of the leg portion energy absorption member by a collision load after completion of the collision with the pedestrian. Hence, by increasing a collision load to be applied on the hip portion energy absorption member which is close to a gravity center position of the pedestrian and reducing a collision load to be applied on the leg portion energy absorption member which is far from the gravity center position of the pedestrian, the angular velocity at which the upper body of the pedestrian falls rearward is reduced and thereby the head of the pedestrian is protected. Moreover, by sufficiently securing the amount of the rearward deformation of the hip portion energy absorption member, the collision energy can be sufficiently absorbed while the collision load to be applied on the hip portion of the pedestrian is prevented from becoming too large.

Further, according to the invention described in claim 2, in addition to the configuration of claim 1, there is provided the pedestrian protection device for a vehicle, wherein the hip portion energy absorption member is movable rearward by a load smaller than that for the leg portion energy absorption member.

With the above configuration, the hip portion energy absorption member is movable rearward by the load smaller than that for the leg portion energy absorption member. This enables preventing the collision load to be inputted from the hip portion energy absorption member to the hip portion of the pedestrian from becoming too large while increasing the amount of the rearward movement of the hip portion energy absorption member to secure the amount of energy absorption.

Further, according to the invention described in claim 3, in addition to the configuration of claim 1 or 2, there is provided the pedestrian protection device for a vehicle, wherein the amount of energy absorption of the hip portion energy absorption member is larger than the amount of energy absorption of the leg portion energy absorption member.

With the above configuration, the amount of energy absorption of the hip portion energy absorption member is larger than the amount of energy absorption of the leg portion energy absorption member. This reduces the collision load to be inputted from the leg portion energy absorption member to the leg portion of the pedestrian, thus enabling an effective reduction of the angular velocity at which the upper body of the pedestrian falls rearward.

Further, according to the invention described in claim 4, in addition to the configuration of any one of claims 1 to 3, there is provided the pedestrian protection device for a vehicle, wherein the hip portion energy absorption member is arranged in two stages in an up-and-down direction.

With the above configuration, the hip portion energy absorption member is arranged in two stages in the up-and-down direction. Hence, the flexibility in setting the collision energy absorption characteristics of the hip portion energy absorption member can be improved.

Further, according to the invention described in claim 5, in addition to the configuration of any one of claims 1 to 4, there is provided the pedestrian protection device for a vehicle, wherein the leg portion energy absorption member is arranged in two stages in an up-and-down direction.

With the above configuration, the leg portion energy absorption member is arranged in two stages in the up-and-down direction. Hence, the flexibility in setting the collision energy absorption characteristics of the leg portion energy absorption member can be improved.

Further, according to the invention described in claim 6, in addition to the configuration of any one of claims 1 to 5, there is provided the pedestrian protection device for a vehicle, wherein the hip portion energy absorption member is an energy absorption rib provided at a front portion of a bonnet hood.

With the above configuration, the hip portion energy absorption member is constituted of the energy absorption rib provided at the front portion of the bonnet hood. Hence, it is easy to dispose the hip portion energy absorption member forward of the leg portion energy absorption member.

Further, according to the invention described in claim 7, in addition to the configuration of any one of claims 1 to 5, there is provided the pedestrian protection device for a vehicle, wherein the hip portion energy absorption member is a reinforcement member provided on a back surface of a bumper face.

With the above configuration, the hip portion energy absorption member is constituted of the reinforcement member provided on the back surface of the bumper face. Hence, it is easy to dispose the hip portion energy absorption member forward of the leg portion energy absorption member.

Further, according to the invention described in claim 8, in addition to the configuration of any one of claims 1 to 5, there is provided the pedestrian protection device for a vehicle, wherein the hip portion energy absorption member is an energy absorption rib provided on a back surface of a front grille.

With the above configuration, the hip portion energy absorption member is constituted of the energy absorption rib provided on the back surface of the front grille. Hence, it is easy to dispose the hip portion energy absorption member forward of the leg portion energy absorption member.

Further, according to the invention described in claim 9, in addition to the configuration of any one of claims 1 to 5, there is provided the pedestrian protection device for a vehicle, wherein the hip portion energy absorption member is a reinforcement member provided on a back surface of a front grille.

With the above configuration, the hip portion energy absorption member is constituted of the reinforcement member provided on the back surface of the front grille. Hence, it is easy to dispose the hip portion energy absorption member forward of the leg portion energy absorption member.

Further, according to the invention there is provided a pedestrian protection device for a vehicle according to claim 10.

With the above configuration, the central portion in the lateral direction of the hip portion energy absorption member is located forward of the central portion in the lateral direction of the leg portion energy absorption member before the collision with the pedestrian, and is moved rearward of the central portion in the lateral direction of the leg portion energy absorption member by the collision load after the collision with the pedestrian. Hence, by increasing the collision load to be applied on the hip portion energy absorption member which is close to the gravity center position of the pedestrian and reducing the collision load to be applied on the leg portion energy absorption member which is far from the gravity center position of the pedestrian, the angular velocity at which the upper body of the pedestrian falls rearward is reduced and thereby the head of the pedestrian is protected. Moreover, by sufficiently securing the amount of the rearward deformation of the hip portion energy absorption member, the collision energy can be sufficiently absorbed while the collision load to be applied on the hip portion of the pedestrian is prevented from becoming too large. Further, when the pedestrian collides with a position offset in the lateral direction from a central portion of the vehicle body, the hip portion energy absorption member and the leg portion energy absorption member are hard to deform and thus the energy absorption effect is low; however, since each of the hip portion energy absorption member and the leg portion energy absorption member is curved in such a manner that the central portion in the lateral direction thereof protrudes toward the front of the vehicle body in a convex shape, the collision load can be reduced by letting the pedestrian escape from the collision position toward the outside in the lateral direction.

Further, according to the invention described in claim 11, in addition to the configuration of claim 10, there is provided the pedestrian protection device for a vehicle, wherein opposite end portions in the lateral direction of the hip portion energy absorption member are coupled to a vehicle body frame in such a manner that the hip portion energy absorption member is pivotable.

With the above configuration, the opposite end portions in the lateral direction of the hip portion energy absorption member are coupled to the vehicle body frame in such a manner that the hip portion energy absorption member is pivotable. Thus, even when the hip portion energy absorption member is deformed rearward by the collision load and the bending load thereby acts on the coupling portion with the vehicle body frame, the deformation of the vehicle body frame due to this bending load can be suppressed to the minimum.

Further, according to the invention described in claim 12, in addition to the configuration of claim 10 or 11, there is provided the pedestrian protection device for a vehicle, wherein at least one of opposite end portions in the lateral direction of the hip portion energy absorption member is coupled to a vehicle body frame in such a manner that the hip portion energy absorption member is slidable relative to the vehicle body frame.

With the above configuration, at least one of the opposite end portions in the lateral direction of the hip portion energy absorption member is coupled to the vehicle body frame in such a manner that the hip portion energy absorption member is slidable relative to the vehicle body frame. Thus, even when the hip portion energy absorption member is deformed rearward by the collision load and thereby an outward load from the center in the lateral direction of the vehicle body acts on the coupling portion with the vehicle body frame, the deformation of the vehicle body frame due to this load can be suppressed to the minimum.

Further, according to the invention described in claim 13, in addition to the configuration of any one of claims 10 to 12, there is provided the pedestrian protection device for a vehicle, wherein an upper portion of a cooling device is supported by an attachment bracket provided to protrude rearward from the hip portion energy absorption member.

With the above configuration, the upper portion of the cooling device is supported by the attachment bracket provided to protrude rearward from the hip portion energy absorption member. This makes the upper portion of the cooling device to lean rearward when the hip portion energy absorption member is deformed rearward by the collision load. Thereby, the damage to the cooling device can be suppressed to the minimum.

Further, according to the invention described in claim 14, in addition to the configuration of any one of claims 10 to 13, there is provided the pedestrian protection device for a vehicle, wherein a hood lock configured to fix a front edge of a bonnet hood is provided at the central portion in the lateral direction of the hip portion energy absorption member, and the central portion in the lateral direction of the hip portion energy absorption member is coupled to the central portion in the lateral direction of the leg portion energy absorption member through a coupling member extending in an up-and-down direction.

With the above configuration, the hood lock configured to fix the front edge of the bonnet hood is provided at the central portion in the lateral direction of the hip portion energy absorption member, and the central portion in the lateral direction of the hip portion energy absorption member is coupled to the central portion in the lateral direction of the leg portion energy absorption member through the coupling member extending in the up-and-down direction. Thereby, when the bonnet hood is closed with force, the load generated by this closing operation can be transmitted to the leg portion energy absorption member through the hood lock and the coupling member.

Further, according to the invention described in claim 15, in addition to the configuration of claim 14, there is provided the pedestrian protection device for a vehicle, wherein the coupling member includes a fragile portion, which is easily bent, at a coupling portion thereof with the leg portion energy absorption member.

With the above configuration, the coupling member includes the fragile portion, which is easily bent, at the coupling portion thereof with the leg portion energy absorption member. Accordingly, at the time of a slight collision in which the collision load is inputted only to the hip portion energy absorption member, the coupling member is deformed at the fragile portion to prevent the deformation of the leg portion energy absorption member. Thereby, the repair cost for the leg portion energy absorption member can be reduced.

Further, according to the invention described in claim 16, in addition to the configuration of claim 14 or 15, there is provided the pedestrian protection device for a vehicle, wherein the coupling member includes a sliding portion, which is slidable back and forth relative to the leg portion energy absorption member, at the coupling portion thereof with the leg portion energy absorption member.

With the above configuration, the coupling member includes the sliding portion, which is slidable back and forth relative to the leg portion energy absorption member, at the coupling portion thereof with the leg portion energy absorption member. Accordingly, at the time of a slight collision in which the collision load is inputted only to the hip portion energy absorption member, the sliding portion of the coupling member slides and thereby the deformation of the leg portion energy absorption member is prevented. Thereby, the repair cost for the leg portion energy absorption member can be reduced. In contrast, at the time of a slight collision in which the collision load is inputted only to the leg portion energy absorption member, the sliding portion of the coupling member slides and thereby only the leg portion energy absorption member is deformed. Thus, the deformation of the hip portion energy absorption member can be prevented and the repair cost for the hip portion energy absorption member can be thereby reduced.

Here, a stay 14 of embodiments corresponds to a vehicle body frame of the present invention; a bumper beam 16 of the embodiments correspond to the leg portion energy absorption member of the present invention; a bulkhead upper member 18 of the embodiments corresponds to the hip portion energy absorption member of the present invention; a center beam 19 of the embodiments corresponds to the coupling member of the present invention; a notch 19a of the embodiments corresponds to the fragile portion of the present invention; a long hole 19b of the embodiments corresponds to the sliding portion of the present invention; a radiator attachment bracket 24 and a condenser attachment bracket 25 of the embodiments correspond to the attachment bracket of the present invention; and a radiator 28 and a condenser 29 of the embodiments correspond to the cooling device of the present invention.

The above and other objects, characteristics and advantages of the present invention will be clear from detailed descriptions of the preferred embodiments which will be provided below while referring to the attached drawings.

BRIEF DESCRIPTION OF THE DRAWINGS

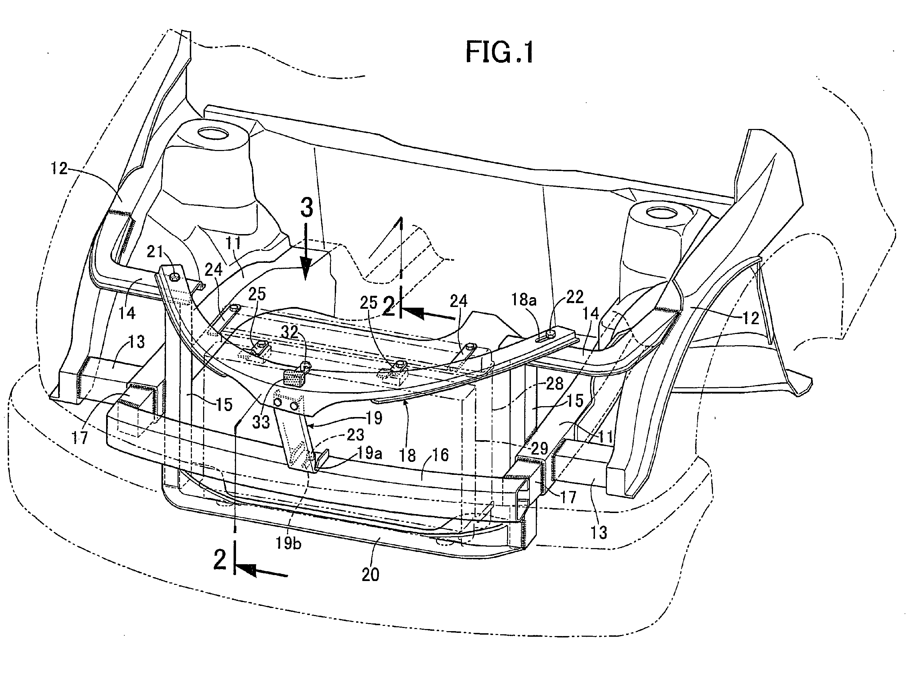

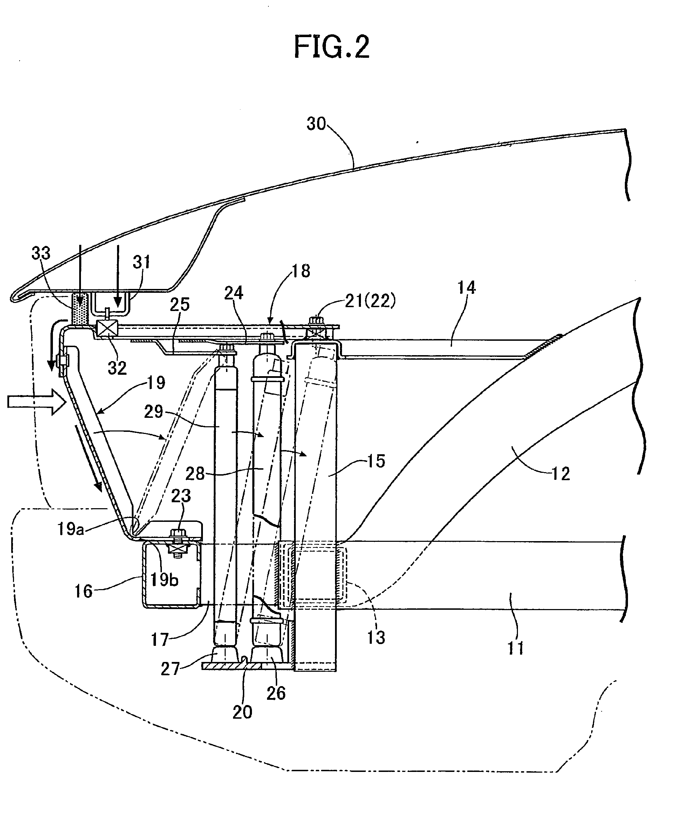

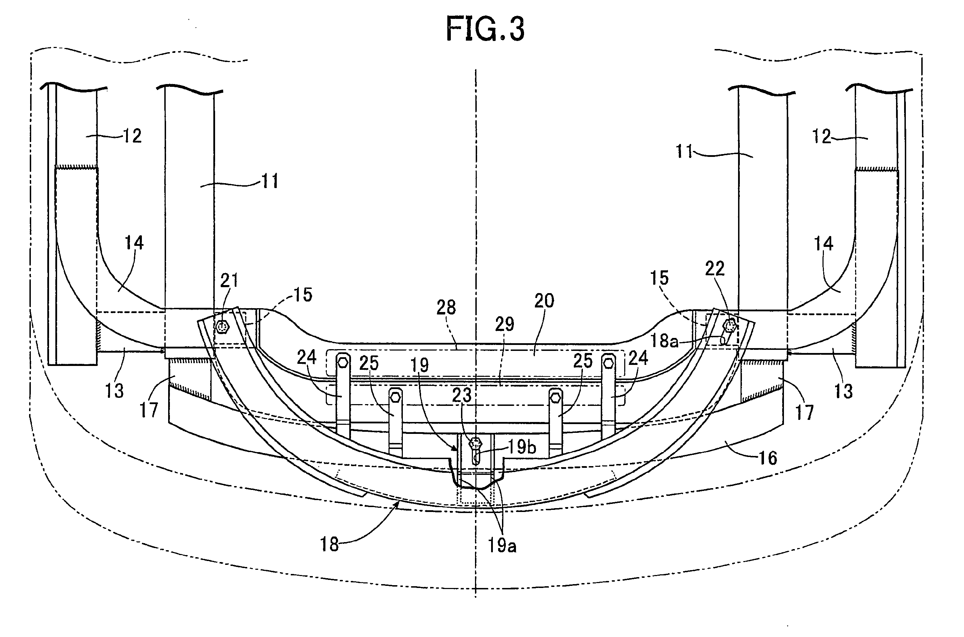

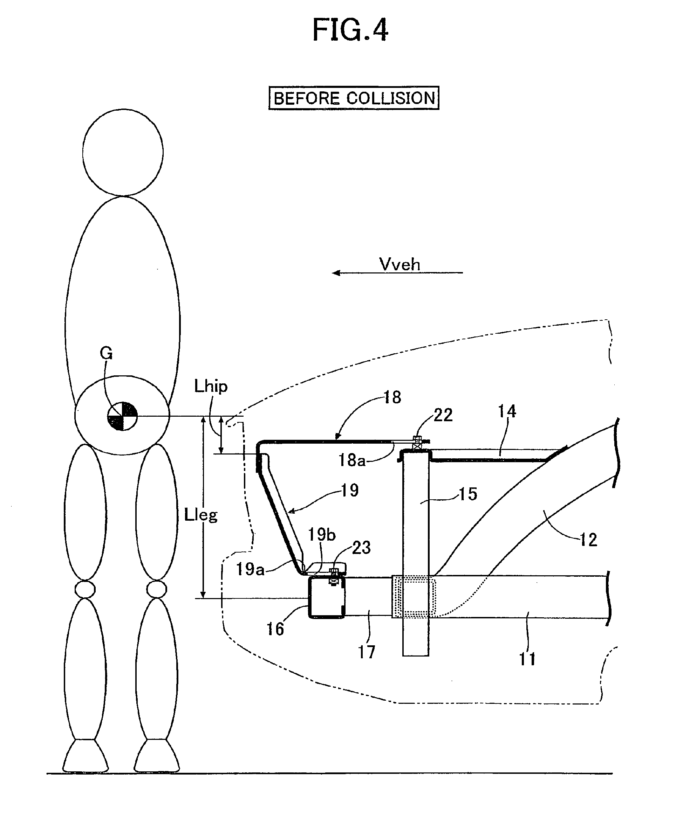

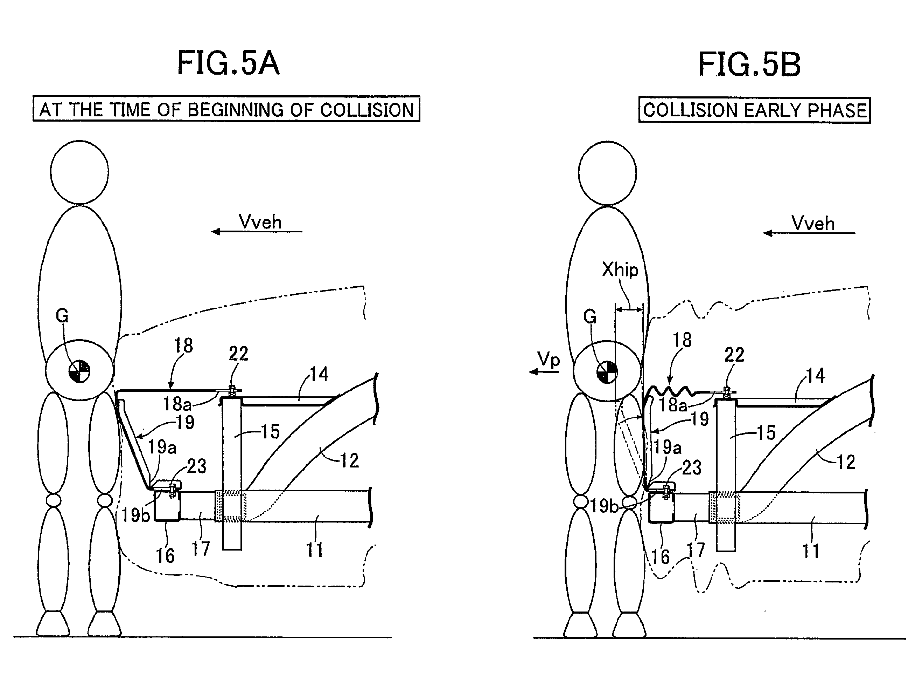

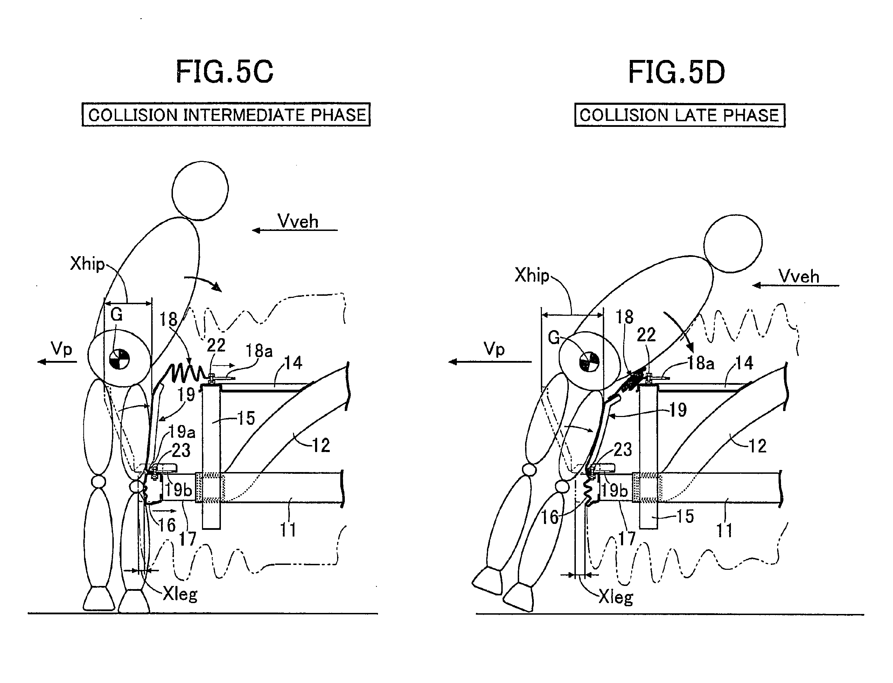

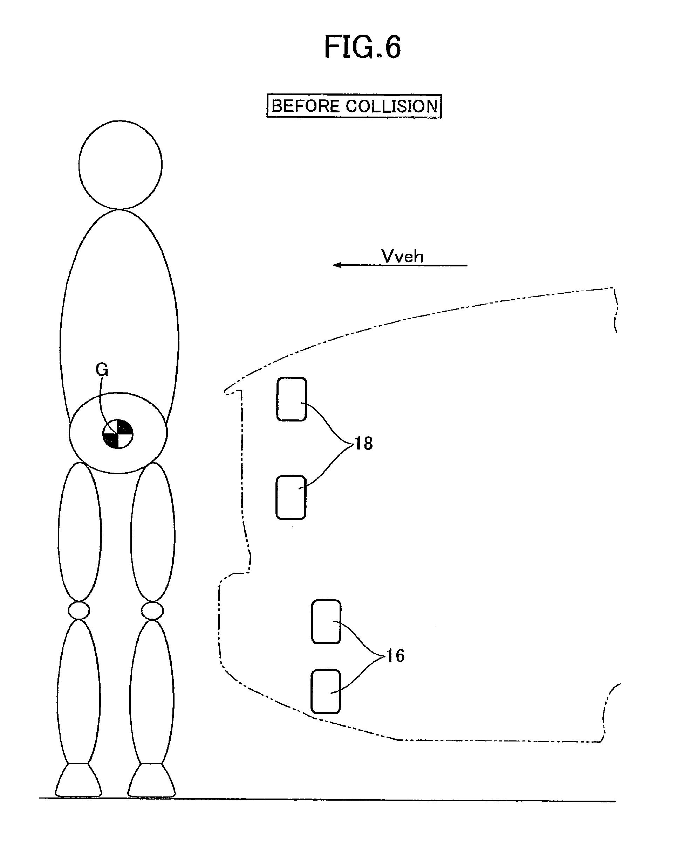

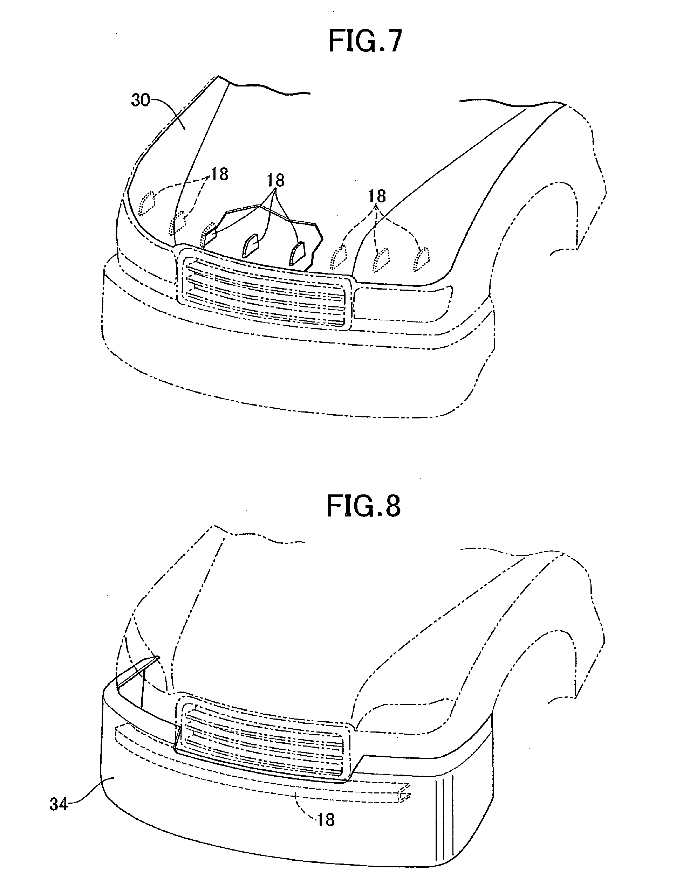

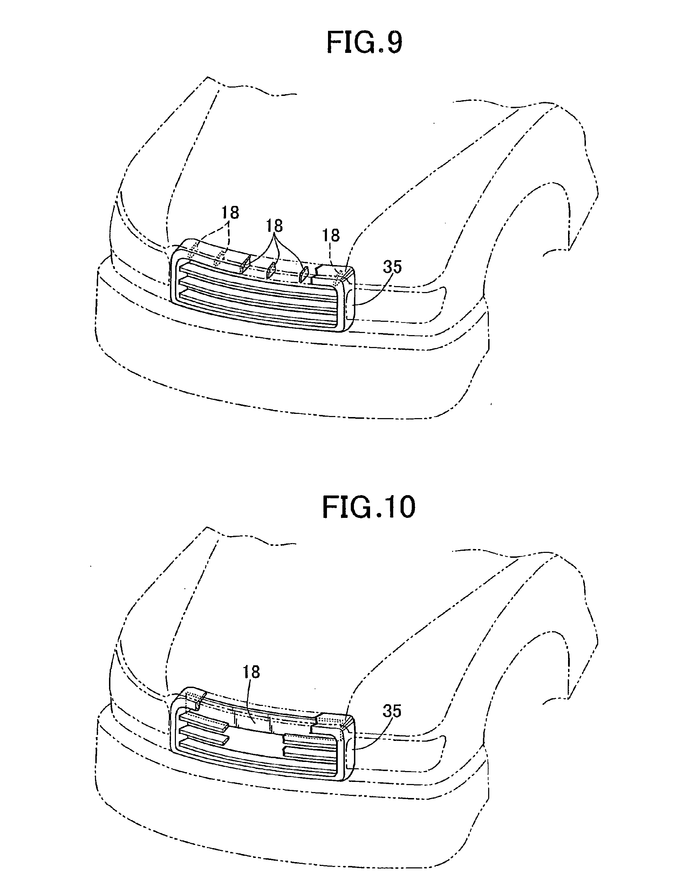

FIG. 1 to FIG. 5D show a first embodiment of the present invention: FIG. 1 is a perspective view of a front part of a vehicle body of an automobile; FIG. 2 is a sectional view taken along a line 2-2 in FIG. 1; FIG. 3 is a view seen from a direction of an arrow 3 in FIG. 1; FIG. 4 is a view explaining an operation when the automobile collides with a pedestrian; and FIGS. 5A and 5D are views explaining operations when the automobile collides with the pedestrian. FIG. 6 is a view showing an alignment of a hip portion energy absorption member and a leg portion energy absorption member according to a second embodiment of the present invention. FIG. 7 and 8 are views showing other embodiments of a hip portion energy absorption member according to third and fourth embodiments of the present invention. FIG. 9 and 10 are views showing other embodiments of a hip portion energy absorption member according to fifth and sixth embodiments of the present invention.

DESCRIPTION OF PREFERRED EMBODIMENTS

Descriptions will be hereinbelow provided for a first embodiment of the present invention based on FIGS. 1 to 5D.

As shown in FIGS. 1 to 3, paired left and right front side frames 11, 11 extending in a front-to-rear direction of a vehicle body are arranged in an automobile on both left and right side portions of a front portion of the vehicle body. The front ends of paired left and right upper members 12, 12, which extend downward toward a front of the vehicle body respectively from the front ends of paired left and right front pillars (not shown), are connected to outer surfaces of the front ends of the front side frames 11, 11 through paired left and right stays 13, 13 extending in the lateral direction. Paired left and right curved stays 14, 14 extend in directions approaching each other from positions slightly rearward of the front ends of the upper members 12, 12, respectively, and the inner ends of the stays 14, 14 are coupled to the front ends of the front side frames 11, 11 through paired left and right bulkhead side members 15, 15. Both ends of a bumper beam 16 which is disposed to extend in the lateral direction are coupled to the front ends of the front side frames 11, 11 through stays 17, 17.

Both left and right ends of a bulkhead upper member 18 are respectively coupled to the inner ends of the left and right stays 14, 14 facing to each other and to the upper ends of the left and right bulkhead side members 15, 15. A central portion in the lateral direction of the bulkhead upper member 18 and a central portion in the lateral direction of the bumper beam 16 are coupled to each other through a center beam 19 extending in an up-and-down direction. Therefore, center beam 19 serves as a coupling member. Further, both left and right ends of a bulkhead lower member 20 are coupled to the lower ends of the left and right bulk head side members 15, 15, respectively.

The bulkhead upper member 18 is curved in a U-shape or a V-shape in such a manner as to protrude forward in a plan view. The right end of the bulkhead upper member 18 is coupled to the inner end in the lateral direction of the right stay 14 with a pin 21 in such a manner that the bulkhead upper member 18 is pivotable, and a long hole 18a formed in the left end of the bulkhead upper member 18 is coupled to the inner end in the lateral direction of the left stay 14 with a pin 22 in such a manner that the bulkhead upper member 18 is pivotable and slidable. The center beam 19, which is fixed at its upper end to the bulkhead upper member 18, has a fragile portion formed of a notch 19a at its lower portion. The center beam 19 has a long hole 19b provided at its lower end and coupled to the upper surface of the bumper beam 16 with a pin 23 in such a manner that the center beam 19 is slidable. The bumper beam 16 is curved in an arc in such a manner that its central portion protrudes toward the front of the vehicle body, but the central portion of the bulkhead upper member 18, which is curved in a U-shape or a V-shape, protrudes toward the front of the vehicle body more than the central portion of the bumper beam 16. Hence, the center beam 19 is disposed obliquely in such a manner that its upper end protrudes toward the front of the vehicle body more than its lower end.

Paired radiator attachment brackets 24, 24 and paired condenser attachment brackets 25, 25 are provided in a protruding manner on the rear edge of the bulkhead upper member 18, and paired rubber radiator support members 26, 26 and paired rubber condenser support members 27, 27 are provided on the upper surface of the bulkhead lower member 20. Further, a radiator 28 is supported between the radiator attachment brackets 24, 24 and the radiator support members 26, 26, and a condenser 29 is supported between the condenser attachment brackets 25, 25 and the condenser support members 27, 27.

A hood lock 32 configured to lock a striker 31 which is provided on the front edge of a bonnet hood 30 covering an engine room from above, and a stopper 33 configured to elastically support the front edge of the bonnet hood 30 are provided on the upper surface of the bulkhead upper member 18 at the central portion thereof.

Next, description will be given of an operation of the embodiment of the present invention having the above configuration.

Referring to FIG. 4, consider a case where a vehicle collides with a pedestrian at a vehicle velocity $V_{veh}$. Assume that, by the collision with the pedestrian, the bulkhead upper member 18 being a hip portion energy absorption member is moved rearward by a distance $X_{hip}$ with a collision load $F_{hip}$, and the bumper beam 16 being a leg portion energy absorption member is moved rearward by a distance $X_{leg}$ with a collision load $F_{leg}$. In this event, assuming that the kinetic energy of the pedestrian, which has been accelerated to the vehicle velocity $V_{veh}$ by the collision is absorbed by the rearward movement of each of the bulkhead upper member 18 and the bumper beam 16, the following law of the conservation of energy is satisfied:

$$(1/2)MV_{veh}{}^2 = F_{hip}\,X_{hip} + F_{leg}\,X_{leg}\,\ldots(1).$$

Here, M is the mass of the pedestrian.

Further, when I indicates the moment of inertia around a gravity center position G of the pedestrian and $d\omega/dt$ indicates an angular acceleration around the gravity center position G of the pedestrian, the following angular motion equation is satisfied:

$$I(d\omega/dt) = F_{hip}\,L_{hip} + F_{leg}\,L_{leg} \qquad \ldots(2).$$

Here, $L_{hip}$ indicates a moment arm from the gravity center position G of the pedestrian to the bulkhead upper member 18, and $L_{leg}$ indicates a moment arm from the gravity center position G of the pedestrian to the bumper beam 16.

In order to reduce an angular velocity at which the head of the pedestrian collides with the bonnet hood 30 in the equation (2), the angular acceleration $d\omega/dt$ on the left side needs to be reduced. To this end, it is necessary to reduce the moment $F_{hip}\,L_{hip}$ by the collision load at the hip portion $F_{hip}$ shown as the first term of the right side and the moment $F_{leg}\,L_{leg}$ by the collision load at the leg portion $F_{leg}$ shown as the second term of the right side.

In this event, it is ideal to reduce both of the collision load at the hip portion $F_{hip}$ and the collision load at the leg portion $F_{leg}$. However, what can be done realistically is only to increase one of the collision load at the hip portion $F_{hip}$ and the collision load at the leg portion $F_{leg}$ and reduce the other since the sum of the collision load at the hip portion $F_{hip}$ and the collision load at the leg portion $F_{leg}$ is almost constant.

To cope with this, when attention is focused on the moment arm $L_{hip}$ from the gravity center position G to the bulkhead upper member 18 and the moment arm $L_{leg}$ from the gravity center position G to the bumper beam 16, $L_{hip} < L_{leg}$ is satisfied. Thus, by reducing the collision load at the leg portion $F_{leg}$ by which the larger moment arm $L_{leg}$ is multiplied and increasing the collision load at the hip portion $F_{hip}$ by which the smaller moment arm $L_{hip}$ is multiplied, it is possible to minimize the sum of the moments on the right side of the equation (2), to minimize the angular acceleration $d\omega/dt$ around the gravity center position of the pedestrian on the left side, and thereby to reduce the angular velocity of the head.

In this regard, the inventions described in Japanese Patent No. 4048461B2 and Japanese Patent Application Laid-open No. 2007-320530 are designed so that the vehicle body may collide with the leg portion of the pedestrian earlier than the hip portion of the pedestrian. For this reason, the collision load at the leg portion $F_{leg}$ is larger than the collision load at the hip portion $F_{hip}$. Thus, there is a problem that the sum of the moments of the right side of the equation (2) is large and the angular velocity of the head is thereby increased.

On the other hand, according to this embodiment, since the bulkhead upper member 18 protrudes forward of the bumper beam 16, the collision load at the hip portion $F_{hip}$ is larger than the collision load at the leg portion $F_{leg}$ when the vehicle collides with the pedestrian. This enables minimizing the angular velocity of the head of the pedestrian and thereby reducing the impact applied when the head collides with the bonnet hood 30.

As described above, in order to minimize the angular velocity of the head of the pedestrian, it is effective to increase the collision load at the hip portion $F_{hip}$ and reduce the collision load at the leg portion $F_{leg}$. However, since too large collision load at the hip portion $F_{hip}$ may possibly damage the hip portion of the pedestrian, it is difficult to increase the collision load at the hip portion $F_{hip}$ beyond a limit value. The first term of the right side of the equation (1) is the amount of collision energy absorption of the bulkhead upper member 18. Even when the collision load at the hip portion $F_{hip}$ in the first term cannot be increased, an increase in the distance of the rearward movement of the hip portion $X_{hip}$ by the deformation of the bulkhead upper member 18 leads to an increase, to the maximum, of the amount of energy absorption of the bulkhead upper member 18 and to a reduction of the amount of energy absorption to be imposed on the bumper beam 16. Thereby, the angular velocity of the head of the pedestrian can be reduced.

To be more specific, as shown in FIG. 5A, when the front portion of the vehicle collides with the pedestrian, the bulkhead upper member 18 protruding toward the front of the vehicle body comes into contact with the hip portion of the pedestrian first, and a velocity $V_p$ at the gravity center position G of the pedestrian is thereby increased gradually. In a collision early phase shown in FIG. 5B, the bulkhead upper member 18 is moved rearward by the collision with the hip portion of the pedestrian to absorb collision energy, and the bumper beam 16 comes into contact with the leg portion of the pedestrian later than the bulkhead upper member 18.

In a collision intermediate phase shown in FIG. 5C, the bulkhead upper member 18 is moved further rearward and the bumper beam 16 is moved rearward by the collision with the leg portion of the pedestrian. However, since a stroke by which the bumper beam 16 can be moved rearward is set small, the rearward movement of the bumper beam 16 is completed in this collision intermediate phase. Then, the upper body of the pedestrian whose leg portion has been swept forward by the bumper beam 16 rotates rearward about the gravity center position G. In this event, even when the stiffness of the bulkhead upper member 18 is set low so that the collision load at the hip portion $F_{hip}$ may not exceed the limit value, the collision energy at the hip portion can be sufficiently absorbed since the distance of the rearward movement of the hip portion $X_{hip}$ is large, and the collision energy can be absorbed also by the rearward movement of the bumper beam 16. Thus, by securing the largest possible collision load at the hip portion $F_{hip}$ within the range of the limit value, it is possible to suppress the collision load at the leg portion $F_{leg}$ to be as small as possible, to suppress the moment around the gravity center position G of the pedestrian to a small value, and thereby to prevent the angular velocity of the head from being increased.

In a collision late phase shown in FIG. 5D, the rearward movement of the bumper beam 16 is stopped and only the bulkhead upper member 18 is moved rearward to absorb the rest of collision energy. The head of the pedestrian may possibly collide with the bonnet hood 30 in this phase; however, since the angular velocity of the head is suppressed to the minimum as described above, the damage to the head can be reduced.

As has been described, according to this embodiment, the bulkhead upper member 18 is located forward of the bumper beam 16 before the collision with the pedestrian, and is moved rearward of the bumper beam 16 by the collision load after the collision with the pedestrian. Hence, by increasing the collision load to be applied on the bulkhead upper member 18 which is close to the gravity center position G of the pedestrian and reducing the collision load to be applied on the bumper beam 16 which is far from the gravity center position G of the pedestrian, the angular velocity at which the upper body of the pedestrian falls rearward is reduced and thereby the head of the pedestrian is protected. Moreover, by sufficiently securing the amount of the rearward deformation of the bulkhead upper member 18, the collision energy can be sufficiently absorbed while the collision load to be applied on the hip portion of the pedestrian is prevented from becoming too large.

Further, the bulkhead upper member 18 is thinner and less stiff than the bumper beam 16, and both ends of the bulkhead upper member 18 are supported by the pins 21, 22 and the long hole 18a in such a manner that the bulkhead upper member 18 is pivotable and slidable. Thus, the bulkhead upper member 18 can be moved rearward by a load smaller than that for the bumper beam 16. This enables preventing the collision load to be inputted from the bulkhead upper member 18 to the hip portion of the pedestrian from becoming too large while increasing the amount of the rearward movement of the bulkhead upper member 18 to secure the amount of energy absorption.

Further, the amount of energy absorption of the bulkhead upper member 18 is larger than the amount of energy absorption of the bumper beam 16. This reduces the collision load to be inputted to the leg portion of the pedestrian from the bumper beam 16 whose distance from the gravity center position G of the pedestrian is large, and thereby prevents the upper body of the pedestrian from falling rearward rapidly, thus enabling an effective reduction of the angular velocity of the head.

Further, the bulkhead upper member 18 and the bumper beam 16 are each supported at its both left and right portions. Thereby, when the pedestrian collides with the central portion in the lateral direction of each of the bulkhead upper member 18 and the bumper beam 16, the bulkhead upper member 18 and the bumper beam 16 are easily deformed to effectively exhibit their energy absorption effect. On the other hand, when the pedestrian collides with a position of each of the bulkhead upper member 18 and the bumper beam 16 which is offset in the lateral direction from a central portion thereof in the lateral direction, the bulkhead upper member 18 and the bumper beam 16 are hard to deform and thus the energy absorption effect is low; however, since each of the bulkhead upper member 18 and the bumper beam 16 is curved in a convex shape in such a manner that its central portion in the lateral direction protrudes toward the front of the vehicle body, the collision load can be reduced by letting the pedestrian escape from the collision position toward the outside in the lateral direction.

Further, both end portions in the lateral direction of the bulkhead upper member 18 are coupled to the stays 14, 14 with the pins 21, 22, respectively, in such a manner that the bulkhead upper member 18 is pivotable. Thus, even when the bulkhead upper member 18 is deformed rearward by the collision load and a bending load thereby acts on the coupling portions with the stays 14, 14, the deformation of the stays 14, 14 due to this bending load can be suppressed to the minimum.

Further, one end portion of the bulkhead upper member 18 is coupled to one of the left and right stays 14 with the long hole 18a and the pin 22 in such a manner that the bulkhead upper member 18 is slidable. Thus, even when the bulkhead upper member 18 is deformed rearward by the collision load and an outward load from the center in the lateral direction of the vehicle body thereby acts on the coupling portions with the left and right stays 14, 14, the deformation of the stays 14, 14 due to this load can be suppressed to the minimum.

Further, the upper portions of the radiator 28 and the condenser 29 are respectively supported by the radiator attachment brackets 24, 24 and the condenser attachment brackets 25, 25 which are provided to protrude rearward from the bulkhead upper member 18. This makes the upper portions of the radiator 28 and the condenser 29 to lean rearward together with the bulkhead upper member 18 when the bulkhead upper member 18 is deformed rearward by the collision load. Thereby, the damage to the radiator 28 and the condenser 29 can be suppressed to the minimum.

Further, the hood lock 32 configured to lock the striker 31 provided on the front edge of the bonnet hood 30 is provided at the central portion in the lateral direction of the bulkhead upper member 18, and the central portion in the lateral direction of the bulkhead upper member 18 is coupled to the central portion in the lateral direction of the bumper beam 16 through the center beam 19 extending in the up-and-down direction. Thereby, when the bonnet hood 30 is closed with force, the load generated by this closing operation can be transmitted to the bumper beam 16 through the hood lock 32 and the center beam 19 (see FIG. 2).

Further, the center beam 19 includes the notch 19a, at which the center beam 19 is easily bent, at its coupling portion with the bumper beam 16, and is supported by the bumper beam 16 through the long hole 19b and the pin 23 in such a manner that the center beam 19 is slidable back and forth. Accordingly, at the time of a slight collision in which the collision load is inputted only to the bulkhead upper member 18, the center beam 19 is deformed at the notch 19a or the long hole 19b slides relative to the pin 23. Thus, the deformation of the bumper beam 16 can be prevented and the repair cost can be thereby reduced.

Next, a second embodiment of the present invention will be described on the basis of FIG. 6.

In the second embodiment, hip portion energy absorption members 18, 18 are obtained by dividing, in the up-and-down direction, the hip portion energy absorption member into two, and leg portion energy absorption members 16, 16 are obtained by dividing, in the up-and-down direction, the leg portion energy absorption member into two. By dividing, in the up-and-down direction, the hip portion energy absorption member and the leg portion energy absorption member into two, i.e., into the hip portion energy absorption members 18, 18 and the leg portion energy absorption members 16, 16 in this manner, different heights, different stiffnesses, the different amounts of rearward movement, and the like can be applied to the members and thus the designing flexibility can be improved.

Next, other embodiments of the present invention will be described on the basis of FIGS. 7 to 10.

In a third embodiment of the present invention shown in FIG. 7, hip portion energy absorption members 18 are constituted of multiple energy absorption ribs arranged along the front edge of the bonnet hood 30.

In a fourth embodiment of the present invention shown in FIG. 8, a hip portion energy absorption member 18 is constituted of a reinforcement member formed of a metal press part or a resin-molded part disposed on the rear surface of a bumper face 34 at an upper portion thereof.

In a fifth embodiment of the present invention shown in FIG. 9, hip portion energy absorption members 18 are constituted of multiple energy absorption ribs arranged along the rear surface of a front grille 35 at an upper portion thereof.

In a sixth embodiment of the present invention shown in FIG. 10, a hip portion energy absorption member 18 is constituted of a reinforcement member formed of a metal press part or a resin-molded part disposed on the rear surface of a front grille 35 at an upper portion thereof.

According to these second and third embodiments, it is easy to arrange the hip portion energy absorption members 18 forward of the leg portion energy absorption member(s) (bumper beam(s) 16).

Although the embodiments of the present invention have been described thus far, various design changes can be made within a range not deviating from the gist of the present invention.

For example, the hip portion energy absorption member of the present invention is not limited to the bulkhead upper member 18 of the embodiments, and the leg portion energy absorption member of the present invention is not limited to the bumper beam 16 of the embodiments.

Further, according to the embodiments, the bulkhead upper member 18 and the bumper beam 16 are fixed to the vehicle body. However, one or both of the bulkhead upper member 18 and the bumper beam 16 may be provided to the vehicle body to be movable back and forth. In this case, if it is judged that the vehicle will inevitably collide with the pedestrian, it is only necessary to move the bulkhead upper member 18 and/or the bumper beam 16 forward so that the bulkhead upper member 18 is located forward of the bumper beam 16.

Further, according to the embodiments, the right end of the bulkhead upper member 18 is supported by the pin 21 in such a manner that the bulkhead upper member 18 is pivotable, and the left end of the bulkhead upper member 18 is supported by the long hole 18a and the pin 22 in such a manner that the bulkhead upper member 18 is pivotable and slidable. However, the ways of supporting the right end and the left end may be reversed, or both left and right ends may be supported in such a manner that the bulkhead upper member 18 is slidable.

Further, according to the embodiments, the long hole 19b allows the center beam 19 to be slidable rearward relative to the bumper beam 16. However, the long hole 19b may allow the bumper beam 16 to be slidable rearward relative to the center beam 19. With this configuration, at the time of a slight collision in which the collision load is inputted only to the bumper beam 16, the long hole 19b of the center beam 19 slides and thereby only the bumper beam 16 is deformed. Thus, the deformation of the bulkhead upper member 18 can be prevented and the repair cost for the bulkhead upper member 18 can be thereby reduced.

A bulkhead upper member (18) is located forward of a bumper beam (16) before the collision with a pedestrian, and is moved rearward of the bumper beam (16) by a collision load after the collision with the pedestrian. Hence, by increasing a collision load to be applied on the bulkhead upper member (18) which is close to a gravity center position of the pedestrian and reducing a collision load to be applied on the bumper beam (16) which is far from the gravity center position of the pedestrian, the angular velocity at which the upper body of the pedestrian falls rearward is reduced and thereby the head of the pedestrian is protected. Moreover, by sufficiently securing the amount of the rearward deformation of the bulkhead upper member (18), the collision energy can be sufficiently absorbed while the collision load to be applied on the hip portion of the pedestrian is prevented from becoming too large.

**Claims**

1. A pedestrian protection device for a vehicle, the device disposed at a front portion of a vehicle body of a vehicle and configured to absorb collision energy at the time of a collision with a pedestrian, the device comprising:

   a hip portion energy absorption member (18) configured to absorb the collision energy by colliding with a hip portion of the pedestrian; and
   a leg portion energy absorption member (16) configured to absorb the collision energy by colliding with a leg portion of the pedestrian,
   wherein by the collision with the pedestrian, the hip portion energy absorption member (18) and the leg portion energy absorption member (16) are moved rearward while absorbing the collision energy, and
   after completion of the collision with the pedestrian, the hip portion energy absorption member (18) is located rearward of the leg portion energy absorption member (16),

   **characterized in that** before the collision with the pedestrian, the hip portion energy absorption member (18) is located forward of the leg portion energy absorption member (16).

2. The pedestrian protection device for a vehicle according to claim 1,
   wherein the hip portion energy absorption member (18) is movable rearward by a load smaller than that for the leg portion energy absorption member (16).

3. The pedestrian protection device for a vehicle according to claim 1 or 2, wherein the amount of energy absorption of the hip portion energy absorption member (18) is larger than the amount of energy absorption of the leg portion energy absorption member (16).

4. The pedestrian protection device for a vehicle according to any one of claims 1 to 3,
   wherein the hip portion energy absorption member (18) is arranged in two stages in an up-and-down direction.

5. The pedestrian protection device for a vehicle according to any one of claims 1 to 4,

wherein the leg portion energy absorption member (16) is arranged in two stages in an up-and-down direction.

6. The pedestrian protection device for a vehicle according to any one of claims 1 to 5,
   wherein the hip portion energy absorption member (18) is an energy absorption rib provided at a front portion of a bonnet hood (30).

7. The pedestrian protection device for a vehicle according to any one of claims 1 to 5,
   wherein the hip portion energy absorption member (18) is a reinforcement member provided on a back surface of a bumper face (34).

8. The pedestrian protection device for a vehicle according to any one of claims 1 to 5,
   wherein the hip portion energy absorption member (18) is an energy absorption rib provided on a back surface of a front grille (35).

9. The pedestrian protection device for a vehicle according to any one of claims 1 to 5,
   wherein the hip portion energy absorption member (18) is a reinforcement member provided on a back surface of a front grille (35).

10. The pedestrian protection device for a vehicle according to any one of the preceding claims, wherein
    the hip portion energy absorption member (18) is curved in a convex shape in such a manner that a central portion thereof in a lateral direction protrudes toward the front of the vehicle body; and
    the leg portion energy absorption member (16) is curved in a convex shape in such a manner that a central portion thereof in a lateral direction protrudes toward the front of the vehicle body,
    wherein the central portion in the lateral direction of the hip portion energy absorption member (18) is located forward of the central portion in the lateral direction of the leg portion energy absorption member (16) before the collision with the pedestrian, and is moved rearward of the central portion in the lateral direction of the leg portion energy absorption member (16) by a collision load after the collision with the pedestrian.

11. The pedestrian protection device for a vehicle according to claim 10,
    wherein opposite end portions in the lateral direction of the hip portion energy absorption member (18) are coupled to a vehicle body frame (14) in such a manner that the hip portion energy absorption member (18) is pivotable.

12. The pedestrian protection device for a vehicle according to claim 10 or 11,
    wherein at least one of opposite end portions in the lateral direction of the hip portion energy absorption member (18) is coupled to a vehicle body frame (14) in such a manner that the hip portion energy absorption member (18) is slidable relative to the vehicle body frame (14).

13. The pedestrian protection device for a vehicle according to any one of claims 10 to 12,
    wherein an upper portion of a cooling device (28, 29) is supported by an attachment bracket (24, 25) provided to protrude rearward from the hip portion energy absorption member (18).

14. The pedestrian protection device for a vehicle according to any one of claims 10 to 13,
    wherein a hood lock (32) configured to fix a front edge of a bonnet hood (30) is provided at the central portion in the lateral direction of the hip portion energy absorption member (18), and
    the central portion in the lateral direction of the hip portion energy absorption member (18) is coupled to the central portion in the lateral direction of the leg portion energy absorption member (16) through a coupling member (19) extending in an up-and-down direction.

15. The pedestrian protection device for a vehicle according to claim 14,
    wherein the coupling member (19) includes a fragile portion (19a), which is easily bent, at a coupling portion thereof with the leg portion energy absorption member (16).

16. The pedestrian protection device for a vehicle according to claim 14 or 15,
    wherein the coupling member (19) includes a sliding portion (19b), which is slidable back and forth relative to the leg portion energy absorption member (16), at the coupling portion thereof with the leg portion energy absorption member (16).

**Patentansprüche**

1. Fußgänger-Schutzvorrichtung für ein Fahrzeug, wobei die Vorrichtung an einem Vorderabschnitt einer Fahrzeugkarosserie angeordnet und dazu eingerichtet ist, Kollisionsenergie zum Zeitpunkt einer Kollision mit einem Fußgänger zu absorbieren, wobei die Vorrichtung umfasst:

   ein Hüftabschnitt-Energieabsorptionselement (18), das dazu eingerichtet ist, die Kollisionsenergie durch Kollidieren mit einem Hüftabschnitt des Fußgängers zu absorbieren; und
   ein Beinabschnitt-Energieabsorptionselement (16), das dazu eingerichtet ist, die Kollisionsenergie durch Kollidieren mit einem Beinabschnitt des Fußgängers zu absorbieren,
   wobei durch die Kollision mit dem Fußgänger das Hüftabschnitt-Energieabsorptionselement (18) und das Beinabschnitt-Energieabsorptionselement (16) nach hinten bewegt werden, während sie die Kollisionsenergie absorbieren; und
   sich nach Abschluss der Kollision mit dem Fußgänger das Hüftabschnitt-Energieabsorptionselement (18) hinter dem Beinabschnitt-Energieabsorptionselement (16) befindet,
   **dadurch gekennzeichnet, dass** sich vor der Kollision mit dem Fußgänger das Hüftabschnitt-Energieabsorptionselement (18) vor dem Beinabschnitt-Energieabsorptionselement (16) befindet.

2. Fußgänger-Schutzvorrichtung für ein Fahrzeug nach Anspruch 1, wobei das Hüftabschnitt-Energieabsorptionselement (18) durch eine Last nach hinten bewegbar ist, welche geringer als die für das Beinabschnitt-Energieabsorptionselement (16) ist.

3. Fußgänger-Schutzvorrichtung für ein Fahrzeug nach Anspruch 1 oder 2, wobei der Energieabsorptionsbetrag des Hüftabschnitt-Energieabsorptionselements (18) größer als der Energieabsorptionsbetrag des Beinabschnitt-Energieabsorptionselements (16) ist.

4. Fußgänger-Schutzvorrichtung für ein Fahrzeug nach einem der Ansprüche 1 bis 3, wobei das Hüftabschnitt-Energieabsorptionselement (18) in zwei Stufen in einer Auf-und-Ab-Richtung angeordnet ist.

5. Fußgänger-Schutzvorrichtung für ein Fahrzeug nach einem der Ansprüche 1 bis 4, wobei das Beinabschnitt-Energieabsorptionselement (16) in zwei Stufen in einer Auf-und-Ab-Richtung angeordnet ist.

6. Fußgänger-Schutzvorrichtung für ein Fahrzeug nach einem der Ansprüche 1 bis 5, wobei das Hüftabschnitt-Energieabsorptionselement (18) eine Energieabsorptionsrippe ist, welche an einem Vorderabschnitt einer Motorhaube (30) bereitgestellt ist.

7. Fußgänger-Schutzvorrichtung für ein Fahrzeug nach einem der Ansprüche 1 bis 5, wobei das Hüftabschnitt-Energieabsorptionselement (18) ein Verstärkungselement ist, welches an einer hinteren Fläche einer Stoßstangenseite (34) bereitgestellt ist.

8. Fußgänger-Schutzvorrichtung für ein Fahrzeug nach einem der Ansprüche 1 bis 5, wobei das Hüftabschnitt-Energieabsorptionselement (18) eine Energieabsorptionsrippe ist, welche an einer hinteren Fläche eines Kühlergrills (35) bereitgestellt ist.

9. Fußgänger-Schutzvorrichtung für ein Fahrzeug nach einem der Ansprüche 1 bis 5, wobei das Hüftabschnitt-Energieabsorptionselement (18) ein Verstärkungselement ist, welches an einer hinteren Fläche eines Kühlergrills (35) bereitgestellt ist.

10. Fußgänger-Schutzvorrichtung für ein Fahrzeug nach einem der vorhergehenden Ansprüche, wobei
    das Hüftabschnitt-Energieabsorptionselement (18) derart konvexförmig gekrümmt ist, dass ein mittlerer Abschnitt davon in einer lateralen Richtung in Richtung zur Fahrzeugkarosseriefront hin ragt; und
    das Beinabschnitt-Energieabsorptionselement (16) derart konvexförmig gekrümmt ist, dass ein mittlerer Abschnitt davon in einer lateralen Richtung zur Fahrzeugkarosseriefront hin ragt,
    wobei sich der mittlere Abschnitt in der lateralen Richtung des Hüftabschnitt-Energieabsorptionselements (18) vor dem mittleren Abschnitt in der lateralen Richtung des Beinabschnitt-Energieabsorptionselements (16) vor der Kollision mit dem Fußgänger befindet und hinter den mittleren Abschnitt in der lateralen Richtung des Beinabschnitt-Energieabsorptionselements (16) durch eine Kollisionslast nach der Kollision mit dem Fußgänger bewegt wird.

11. Fußgänger-Schutzvorrichtung für ein Fahrzeug nach Anspruch 10, wobei entgegengesetzte Endabschnitte in der lateralen Richtung des Hüftabschnitt-Energieabsorptionselements (18) an einen Fahrzeugkarosserierahmen (14) derart gekoppelt sind, dass das Hüftabschnitt-Energieabsorptionselement (18) schwenkbar ist.

12. Fußgänger-Schutzvorrichtung für ein Fahrzeug nach Anspruch 10 oder 11, wobei wenigstens einer der entgegengesetzten Endabschnitte in der lateralen Richtung des Hüftabschnitt-Energieabsorptionselements (18) derart an einen Fahrzeugkarosserierahmen (14) gekoppelt ist, dass das Hüftabschnitt-Energieabsorptionselement (18) relativ zu dem Fahrzeugkarosserierahmen (14) gleitbar ist.

13. Fußgänger-Schutzvorrichtung für ein Fahrzeug nach einem der Ansprüche 10 bis 12, wobei ein oberer Abschnitt einer Kühlvorrichtung (28, 29) von einem Befestigungsbügel (24, 25) getragen ist, welcher bereitgestellt ist, um von dem Hüftabschnitt-Energieabsorptionselement (18) nach hinten vorzustehen.

14. Fußgänger-Schutzvorrichtung für ein Fahrzeug nach einem der Ansprüche 10 bis 13,
wobei eine Motorhaubenverriegelung (32), welche dazu eingerichtet ist, einen vorderen Rand einer Motorhaube (30) zu arretieren, an dem mittleren Abschnitt in der lateralen Richtung des Hüftabschnitt-Energieabsorptionselements (18) bereitgestellt ist, und
der mittlere Abschnitt in der lateralen Richtung des Hüftabschnitt-Energieabsorptionselements (18) an den mittleren Abschnitt in der lateralen Richtung des Beinabschnitt-Energieabsorptionselements (16) durch ein Kopplungselement (19) gekoppelt ist, welches sich in einer Auf-und-Ab-Richtung erstreckt.

15. Fußgänger-Schutzvorrichtung für ein Fahrzeug nach Anspruch 14, wobei das Kopplungselement (19) einen fragilen, leicht biegbaren Abschnitt (19a) an einem Kopplungsabschnitt davon an das Beinabschnitt-Energieabsorptionselement (16) umfasst.

16. Fußgänger-Schutzvorrichtung für ein Fahrzeug nach Anspruch 14 oder 15, wobei das Kopplungselement (19) einen Gleitabschnitt (19b), welcher vor und zurück relativ zu dem Beinabschnitt-Energieabsorptionselement (16) gleitbar ist, an einem Kopplungsabschnitt davon an das Beinabschnitt-Energieabsorptionselement (16) umfasst.

## Revendications

1. Dispositif de protection des piétons pour un véhicule, le dispositif étant disposé au niveau d'une partie avant d'une caisse de véhicule d'un véhicule et configuré pour absorber l'énergie de collision au moment de la collision avec un piéton, le dispositif comprenant :

   un élément d'absorption d'énergie de partie de hanche (18) pour absorber l'énergie de collision lors d'un choc avec une partie des hanches du piéton, et
   un élément d'absorption d'énergie de partie de jambe (16) configuré pour absorber l'énergie de collision lors d'un choc avec une partie des jambes du piéton,
   dans lequel par la collision avec le piéton, l'élément d'absorption d'énergie de partie de hanche (18) et l'élément d'absorption d'énergie de partie de jambe (16) sont déplacés vers l'arrière tout en absorbant l'énergie de collision, et
   à la fin de la collision avec le piéton, l'élément d'absorption d'énergie de partie de hanche (18) est positionné à l'arrière de l'élément d'absorption d'énergie de partie de jambe (16),
   **caractérisé en ce que** avant la collision avec le piéton, l'élément d'absorption d'énergie de partie de hanche (18) est positionné à l'avant de l'élément d'absorption d'énergie de partie de jambe (16).

2. Dispositif de protection des piétons pour un véhicule selon la revendication 1, dans lequel l'élément d'absorption d'énergie de partie de hanche (18) est mobile vers l'arrière sous l'effet d'une charge inférieure à celle pour l'élément d'absorption d'énergie de partie de jambe (16).

3. Dispositif de protection des piétons pour un véhicule selon la revendication 1 ou 2, dans lequel la quantité d'absorption d'énergie de l'élément d'absorption d'énergie de partie de hanche (18) est supérieure à la quantité d'absorption d'énergie de l'élément d'absorption d'énergie de partie de jambe (16).

4. Dispositif de protection des piétons pour un véhicule selon l'une quelconque des revendications 1 à 3,
dans lequel l'élément d'absorption d'énergie de partie de hanche (18) est agencé en deux étages dans une direction vers le haut et vers le bas.

5. Dispositif de protection des piétons pour un véhicule selon l'une quelconque des revendications 1 à 4,
dans lequel l'élément d'absorption d'énergie de partie de jambe (16) est agencé en deux étages dans une direction vers le haut et vers le bas.

6. Dispositif de protection des piétons selon l'une quelconque des revendications 1 à 5,
dans lequel l'élément d'absorption d'énergie de partie de hanche (18) est une nervure d'absorption d'énergie agencée au niveau d'une partie avant d'un capot (30).

7. Dispositif de protection des piétons pour un véhicule selon l'une quelconque des revendications 1 à 5,
dans lequel l'élément d'absorption d'énergie de partie de hanche (18) est un élément de renfort agencé sur une surface arrière d'un pare-chocs (34).

8. Dispositif de protection des piétons pour un véhicule selon l'une quelconque des revendications 1 à 5,
dans lequel l'élément d'absorption d'énergie de partie de hanche (18) est une nervure d'absorption d'énergie agencée sur une surface arrière d'une grille avant (35).

9. Dispositif de protection des piétons pour un véhicule selon l'une quelconque des revendications 1 à 5,
dans lequel l'élément d'absorption d'énergie de partie de hanche (18) est un élément de renfort agencé sur une surface arrière d'une grille avant (35).

10. Dispositif de protection des piétons pour un véhicule selon l'une quelconque des revendications précédentes, dans lequel
l'élément d'absorption d'énergie de partie de hanche (18) est incurvé selon une forme convexe de manière à ce qu'une partie centrale de celui-ci dans une direction latérale fasse saillie vers l'avant de la caisse du véhicule, et l'élément d'absorption d'énergie de partie de jambe (16) est incurvé selon une forme convexe de manière à ce qu'une partie centrale de celui-ci dans une direction latérale fasse saillie vers l'avant de la caisse du véhicule,
dans lequel la partie centrale dans la direction latérale de l'élément d'absorption d'énergie de partie de hanche (18) est positionnée à l'avant de la partie centrale dans la direction latérale de l'élément d'absorption d'énergie de partie de jambe (16) avant la collision avec le piéton, et est déplacée vers l'arrière de la partie centrale dans la direction latérale de l'élément d'absorption d'énergie de partie de jambe (16) par une charge de collision après la collision avec le piéton.

11. Dispositif de protection des piétons pour un véhicule selon la revendication 10, dans lequel des parties d'extrémité opposées dans la direction latérale de l'élément d'absorption d'énergie de partie de hanche (18) sont couplées à une structure de caisse du véhicule (14) de manière à ce que l'élément d'absorption d'énergie de partie de hanche (18) puisse pivoter.

12. Dispositif de protection des piétons pour un véhicule selon la revendication 10 ou 11,
dans lequel au moins l'une des parties d'extrémité opposées dans la direction latérale de l'élément d'absorption d'énergie de partie de hanche (18) est couplée à une structure de caisse du véhicule (14) de manière à ce que l'élément d'absorption d'énergie de partie de hanche (18) puisse coulisser par rapport à la structure de caisse du véhicule (14).

13. Dispositif de protection des piétons pour un véhicule selon l'une quelconque des revendications 10 à 12,
dans lequel une partie supérieure d'un dispositif de refroidissement (28, 29) est supportée par une équerre de fixation (24, 25) prévue pour faire saillie vers l'arrière à partir de l'élément d'absorption d'énergie de partie de hanche (18).

14. Dispositif de protection des piétons pour un véhicule selon l'une quelconque des revendications 10 à 13,
dans lequel une serrure de capot (32) configurée pour fixer un bord avant d'un capot (30) est agencée au niveau de la partie centrale dans la direction latérale de l'élément d'absorption d'énergie de partie de hanche (18), et
la partie centrale dans la direction latérale de l'élément d'absorption d'énergie de partie de hanche (18) est couplée à la partie centrale dans la direction latérale de l'élément d'absorption d'énergie de partie de jambe (16) via un élément d'accouplement (19) qui s'étend dans une direction vers le haut et vers le bas.

15. Dispositif de protection des piétons pour un véhicule selon la revendication 14, dans lequel l'élément d'accouplement (19) inclut une partie fragile (19a), laquelle se plie facilement, au niveau d'une partie d'accouplement de celui-ci avec l'élément d'absorption d'énergie de partie de jambe (16) .

16. Dispositif de protection des piétons pour un véhicule selon la revendication 14 ou 15, dans lequel l'élément d'accouplement (19) inclut une partie coulissante (19b), laquelle peut coulisser d'avant en arrière par rapport à l'élément d'absorption d'énergie de partie de jambe (16), au niveau de la partie d'accouplement de celui-ci avec l'élément d'absorption d'énergie de jambe (16).

# FIG.1

EP 2 374 665 B1

# FIG.2

# FIG.3

EP 2 374 665 B1

# FIG.4

BEFORE COLLISION

FIG.5B

COLLISION EARLY PHASE

FIG.5A

AT THE TIME OF BEGINNING OF COLLISION

# FIG.5C

COLLISION INTERMEDIATE PHASE

# FIG.5D

COLLISION LATE PHASE

# FIG.6

BEFORE COLLISION

# FIG.7

# FIG.8

# FIG.9

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2919566 A1
- JP 4048461 B

- JP 2007320530 A